Europäisches Patentamt

European Patent Office

Office européen des brevets

(11) Veröffentlichungsnummer : **0 104 504**
**B1**

(12) # EUROPÄISCHE PATENTSCHRIFT

(45) Veröffentlichungstag der Patentschrift :
04.03.87

(51) Int. Cl.⁴ : **F 16 J 15/56, F 16 J 15/32**

(21) Anmeldenummer : 83108681.4

(22) Anmeldetag : 02.09.83

(54) Dichtungsanordnung mit Doppelabstreifring.

(30) Priorität : 10.09.82 DE 8225484 U

(43) Veröffentlichungstag der Anmeldung :
04.04.84 Patentblatt 84/14

(45) Bekanntmachung des Hinweises auf die Patenterteilung : 04.03.87 Patentblatt 87/10

(84) Benannte Vertragsstaaten :
AT CH DE FR GB IT LI NL SE

(56) Entgegenhaltungen :
FR-A- 1 135 032
FR-A- 2 238 389
US-A- 2 565 923
US-A- 2 907 596

(73) Patentinhaber : **Martin Merkel GmbH & Co. KG**
**Sanitasstrasse 17-21**
**D-2102 Hamburg 93 (DE)**

(72) Erfinder : **Gonschior, Klaus**
**Royberg 2**
**D-2116 Hanstedt-Schierhorn (DE)**
Erfinder : **Harms, Rudolf**
**Mienenbüttel 40**
**D-2153 Neu Wulmstorf (DE)**
Erfinder : **Hopp, Helmut**
**Legienstrasse 156**
**D-2000 Hamburg 74 (DE)**
Erfinder : **Reichow, Günter**
**Eichhof 3**
**D-2105 Seevetal 6 (DE)**
Erfinder : **Timmermann, Hans-Jürgen**
**Achtern Sand 40**
**D-2000 Hamburg 56 (DE)**

(74) Vertreter : **Glawe, Delfs, Moll & Partner Patentanwälte**
**Postfach 26 01 62 Liebherrstrasse 20**
**D-8000 München 26 (DE)**

EP 0 104 504 B1

## Beschreibung

Die Erfindung bezieht sich auf eine Dichtungsanordnung mit einem einen Hochdruckbereich von einem Niederdruckbereich trennenden Gehäuse, mit einer eine Öffnung des Gehäuses durchquerenden und in ihrer Längsrichtung hin- und herbeweglichen Stange, mit einer hochdruckseitig die Gehäuseöffnung gegenüber der Stange abdichtenden Dichtung und einem niederdruckseitig von dieser Dichtung in der Gehäuseöffnung angeordneten Doppelabstreifring, der außer einem an der Stangenoberfläche anliegenden, gegen die Niederdruckseite gerichteten äußeren Abstreiforgan eine gegen die Hochdruckseite gerichtete, an der Stangenoberfläche anliegende innere Lippe zum Abstreifen des darauf haftenden Ölfilms aufweist, wobei ein von der zwischen der Dichtung und dem Abstreifring gelegenem Kammer zum Niederdruckbereich führender, gegen das Eindringen von Fremdkörpern geschützter Kanal vorgesehen ist.

In derartigen Anordnungen hat der Abstreifring einerseits die Aufgabe, an der Stangenoberfläche anhaftende Fremdkörper bei der Einwärtsbewegung der Stange abzustreifen, damit sie nicht in die Dichtungsanordnung eindringen können. Dafür ist das äußere Abstreiforgan vorgesehen. Die innere Abstreiflippe dient dazu, mindestens einen Teil des an der Stangenoberfläche bei deren Auswärtsbewegung haftenden Ölfilm abzustreifen. Ein solcher Ölfilm wird nämlich auch bei ordnungsgemäßer Funktion der hochdruckseitigen Dichtung durch diese hindurch von der Stangenoberfläche mitgeschleppt. Der von der inneren Lippe des Abstreifrings abgestreifte Teil dieses Ölfilms sammelt sich in der zwischen Dichtung und Abstreifring gelegenen Kammer und wird im allgemeinen beim Einwärtsschub der Stange durch die Hochdruckdichtung wieder zurückgeschleppt. Da die innere Lippe des Abstreifrings unter Vorspannung an der Stangenoberfläche anliegt, kann sie als Dichtlippe wirken. Dies hat zur Folge, daß sich in der Kammer zwischen Dichtung und Abstreifring ein Überdruck aufbauen kann, wenn ungewöhnlich viel Medium von der Hochdruckseite durch die Dichtung in die Kammer geführt wird. Um dies zu vermeiden ist es bekannt, einen Druckentlastungskanal vorzusehen, der die Kammer mit dem Niederdruckbereich verbindet (US-A-2 565-923). Jedoch sind derartige Kanäle problematisch, weil sie bei einfacher Ausführung die Gefahr mit sich bringen, daß Schmutz von außen eindringt, während zusätzliche Einrichtungen, die den Kanal vor dem Eindringen von Fremdkörpern schützen sollen, aufwendig und störungsanfällig sind. Verzichtet man jedoch auf einen Druckentlastungskanal, so kann es insbesondere bei Fehlern an der hochdruckseitigen Dichtung, aber auch schon beim Normalbetrieb unter der Wirkung des durch die Dichtung hindurch geschleppten Mediumfilms, zu einem so hohen Druck in der Kammer kommen, daß der Abstreifring aus seiner Gehäusehalterung herausgesprengt wird. Die Erfindung geht daher von der Notwendigkeit der Druckentlastung der zwischen Dichtung und Abstreifring eingeschlossenen Kammer aus. Es liegt ihr die Aufgabe zugrunde, eine Dichtungsanordnung zu schaffen, die eine störungsfreie Druckentlastung gestattet.

Die erfindungsgemäße Lösung besteht darin, daß der im Abstreifring gebildete Kanal ein elastisches Sperrglied enthält, das bei Drucküberstimmung zwischen der Kammer und dem Niederdruckbereich dicht an einer Gegenfläche anliegt und durch in der Kammer herrschenden Überdruck nach außen unter Abhebung von der Gegenfläche verformbar ist. Zweckmäßigerweise liegt das elastische Sperrglied bei Drucküberstimmung unter Vorspannung an der Gegenfläche an.

Die durch die Erfindung erzielte Wirkung besteht einerseits darin, daß der Aufbau wesentlich vereinfacht wird, weil der Druckentlastungskanal im Abstreifring als solchem geformt ist und daher eine spezielle Formgebung des Gehäuses und besondere Zusatzteile zum Schutz eines im Gehäuse gebildeten Kanals entfallen. Andererseits erreicht die Erfindung, daß der Kanal bei Druckausgleich zwischen der Kammer und dem Niederdruckbereich vollständig geschlossen ist, weil das elastische Sperrglied dicht an der Gegenfläche anliegt. Fremdkörper können in diesem Zustand nicht in den Kanal eindringen. Wenn in der Kammer sich ein Überdruck bildet, der das elastische Sperrglied soweit nach außen drückt, daß es sich von der Gegenfläche abhebt, werden Fremdkörper durch den nach außen dringenden Entlastungsstrom am Eindringen gehindert. Auf einfache Weise wird so einerseits eine Druckentlastung der Kammer und andererseits ein ausgezeichneter Schutz vor dem Eindringen von Fremdkörpern geschaffen.

Zwar ist es bei paarig angeordneten Dichtungen für doppeltwirkende Kolben, von denen jeweils eine in einer Bewegungsrichtung des Kolbens wirksam ist bekannt, in jedem der beiden Dichtungsringe einen Rückstromkanal vorzusehen, der sich bei Überdruck im Dichtungszwischenraum zur Niederdruckseite hin öffnet und auf der Hochdruckseite schließt (FR-A-1 135 032). Jedoch sind doch die Voraussetzungen wesentlich anders als im Falle der Erfindung, weil einerseits nicht der Eintritt von Fremdkörpern vollständig zu verhindern ist und andererseits eine Rückschlagventilfunktion gegenüber strömendem Medium erreicht werden sollte, wobei vorausgesetzt werden konnte, daß der Dichtungsring in einer ihn aufnehmenden Nut unter den wechselnden Druckkräften hin- und hergeschoben wird. Dabei wird die Funktion eines Rückschlagventils dadurch erreicht, daß der den Dichtungsring durchquerende Kanal an seiner äußeren Mündung mit einer Ventilklappe versehen wird, die allerdings im entspannten Zustand nicht dicht oder gar mit Vorspannung aufliegt, während seine andere Mündung in derjenigen Fläche des Dichtungsrings liegt, die sich bei Dichtungsfunktion an einer Seitenfläche der den Dichtungsring aufnehmenden Nut abstützt, wobei die Kanalöffnung durch diese Seitenfläche abgeschlossen wird. Wegen der grundlegend verschiedenen Voraussetzung und der unterschiedlichen Konstruktion konnte daher die bekannte Kolbendichtung keine Anregungen für die Lösung des der Erfindung zugrundeliegenden Problems geben.

Bekannt ist ferner ein kombinierter Dicht- und Abstreifring (FR-A-2 238 389), der bei einer Stoßdämpferanordnung zwischen einer Stange und einem ersten Zylinder und einem Druckraum und zwischen den ersten Zylinder und einem diesen umgebenden zweiten Zylinder einen im wesentlichen drucklosen Ausgleichsraum abschließt. Er enthält innenseitig einen Dichtring zum Abschluß des Druckraums und außenseitig eine nach außen gerichtete Abstreiflippe. Zwischen dem Ausgleichsraum und der zwischen Dichtung und Abstreiflippe gebildeten Kammer befindet sich ein Kanal, der bei vertikaler Anordnung mit obenliegender Dichtungsanordnung es ermöglichen soll, daß durch den Dichtring nach außen in die Kammer zwischen Dichtring und Abstreiflippe gedrungenes Medium unter der Wirkung der Schwerkraft zurückfließen kann in den Ausgleichsraum. Eine mit der Erfindung vergleichbare Funktion liegt hier nicht vor.

Der Doppelabstreifer in der erfindungsgemäßen Dichtungsanordnung wird im allgemeinen einstückig ausgebildet. Er kann jedoch auch mehrteilig, beispielsweise aus einem inneren und einem äußeren Abstreifringteil, zusammengesetzt sein.

Bei einer bevorzugten Ausführungsform der Erfindung wird das elastische Sperrglied von dem als vorgespannte Lippe ausgebildeten Abstreiforgan des Abstreifrings gebildet und mündet der von der Kammer ausgehende, ständig offene Kanal in dem zwischen der äußeren und der inneren Abstreiflippe gebildeten Lippenzwischenraum. Wenn im Normalbetrieb in der Kammer kein oder nur geringer Überdruck gegenüber dem Niederdruckbereich herrscht, liegt die äußere Abstreiflippe an der Stange an. Nur wenn sich innerhalb der Kammer und damit über den Verbindungskanal im Lippenzwischenraum ein Überdruck einstellt, hebt sich die äußere Abstreiflippe von der Stangenoberfläche ab, um einen Teil des Mediums zwecks Druckausgleichs herauszulassen. Während der druckentlastenden Strömung ist die abstreifende Wirkung weiterhin gesichert, weil zum einen die Lippe sich nur sehr geringfügig von der Stangenoberfläche abzuheben braucht, um das Medium durchzulassen, und weil zum anderen während der Entlastungsströmung das Eindringen von Fremdkörpern entgegen dieser Strömung praktische ausgeschlossen ist.

Bei einer anderen Ausführungsform der Erfindung ist an dem mit dem Einbaugehäuse zusammenzuwirken bestimmten Oberflächenteil des Abstreifrings eine elastische Dichtlippe vorgesehen und führt ein offener Kanal von der Kammerseite des Abstreifrings zur Innenseite dieser Dichtlippe. Die Dichtlippe liegt normalerweise unter elastischer Vorspannung am Einbaugehäuse an. Tritt kammerseitig ein Überdruck auf, so hebt sie sich zwecks Druckentlastung kurzzeitig von der Oberfläche des Einbaugehäuses ab, um den für die Entlastung erforderlichen Mediumsstrom durchzulassen. Zweckmäßigerweise ist die elastische Dichtlippe am niederdruckseitigen Ende des mit dem Gehäuse zusammenzuwirken bestimmten Oberflächenteils des Abstreifrings angeordnet. Eine Anordnung im mittleren Bereich der Kontaktfläche zwischen Abstreifring und Einbaugehäuse soll jedoch nicht ausgeschlossen sein.

Bei einer weiteren Ausführungsform der Erfindung ist im Abstreifring ein Kanal vorgesehen, der von der Kammerseite zur Außenseite des Abstreifrings führt und eine durch kammerseitigen Überdruck elastisch zu öffnende Engstelle aufweist. Wenn diese an der außenseitigen Mündung des Kanals vorgesehen ist, ergibt sich eine einfache Herstellungsmöglichkeit dadurch, daß der Kanal bis auf eine dünne Endwand geformt oder gebohrt wird und diese Endwand anschließend perforiert wird. Die Perforation kann durch Stanzung so erfolgen, daß eine sehr kleine, für das Eindringen von Fremdkörpern vernachlässigbare Öffnungsgröße verbleibt, die sich bei größerem Entspannungsstrom elastisch aufweiten kann. Es besteht auch die Möglichkeit, durch Nadeleinstich eine Verletzung der dünnen Wand hervorzurufen, deren Spaltwände im entspannten Zustand geschlossen aneinander liegen und nur bei innerem Überdruck sich öffnen. Sehr zweckmäßig ist es in diesem Zusammenhang, die Engstelle von lippenartig nach außen gerichteten Werkstoffteilen zu bilden. Sehr einfach kann man diese Forderung dadurch erfüllen, daß man den Kanal zur dünnen Endwand hin konisch zusammenlaufen läßt. Die konische innenseitige Begrenzung der Endwand in Verbindung mit einer außenseitigen ebenen Begrenzung gibt dann den zur Mittenöffnung hin zusammenlaufenden Wandteilen eine nach außen gewendete Richtungskomponente, die eine lippenartige Funktion hervorruft, die darin besteht, daß der Öffnungswiderstand gegenüber von außen eindringenden Kräften größer ist als gegenüber innerem Überdruck.

Das Prinzip der elastisch zu öffnenden Engstelle im Strömungsweg kann nach der Erfindung auch dadurch verwirklicht werden, daß der Kanal in dem mit dem Gehäuse zusammenzuwirken bestimmten Oberflächenteil des Abstreifrings eingetieft ist und eine zur Gehäusefläche vorragende, elastische Lamelle enthält, die bei Druckausgleich durch Ihren Kontakt mit der Gehäusefläche den Strömungsweg im wesentlichen schließt, bei innerem Überdruck jedoch ausweichen kann, um Druckmedium herauszulassen.

Schließlich ist es nach der Erfindung auch möglich, das die Absperrung des Strömungswegs bewirkende Glied nicht unmittelbar durch den inneren Überdruck in Öffnungsstellung zu bewegen, sondern mittelbar, indem im Strömungsweg am Außenumfang des Abstreifrings ein mit der Kammer verbundener Raum vorgesehen ist, der auf seiner radial nach innen gewendeten Seite durch eine elastische, unter kammerseitigem Überdruck nach radial innen verformbare Wand begrenzt ist, die das Absperrelement als eine nach radial außen zur Gehäusefläche vorragende Trennwand aufweist. Wenn kammerseitiger Überdruck auftritt, so breitet dieser sich auch in den erwähnten Raum aus, wodurch die Wand nach radial innen verformt und die daran sitzende Trennwand von der Gehäusefläche abgehoben wird.

Die Erfindung wird im folgenden näher unter Bezugnahme auf die Zeichnung erläutert, die vorteilhafte Ausführungsbeispiele schematisch veranschaulicht. Es zeigen :

Figur 1 eine Dichtungsanordnung mit Dichtring und Abstreifring,

Figuren 2 und 3 einen Abstreifring mit im Lippenzwischenraum mündendem Kanal im eingebauten bzw. entspannten Zustand,

Figuren 4 und 5 zwei weitere Ausführungsbeispiele mit im Lippenzwischenraum mündendem Kanal,

Figuren 6 und 7 zwei Ausführungsbeispiele mit am Gehäuse anliegender Lippe,

Figuren 8 und 9 zwei Ausführungsbeispiele mit einer am äußeren Ende verengten Bohrung,

Figur 10 ein Ausführungsbeispiel mit einem an der gehäuseseitigen Umfangsfläche eingeformten Kanal mit elastischer Lamelle,

Figur 11 eine Querschnittsdarstellung eines Ausführungsbeispiels mit am gehäuseseitigen Umfang angeordneten Strömungsweg mit zum Gehäuse vorragender Lamelle ;

Figur 12 das gleiche Ausführungsbeispiel wie in Fig. 11, jedoch in axialer Teilansicht und in zwei unterschiedlichen Ausführungen für die axiale Abstützung ;

Figuren 13 und 14 ein Ausführungsbeispiel mit Absperrelementen für den Strömungsweg an einer unter Überdruck nach innen verformbaren Wand im unverformten und verformten Zustand und

Figur 15 eine abgewandelte Ausführungsform nach demselben Prinzip.

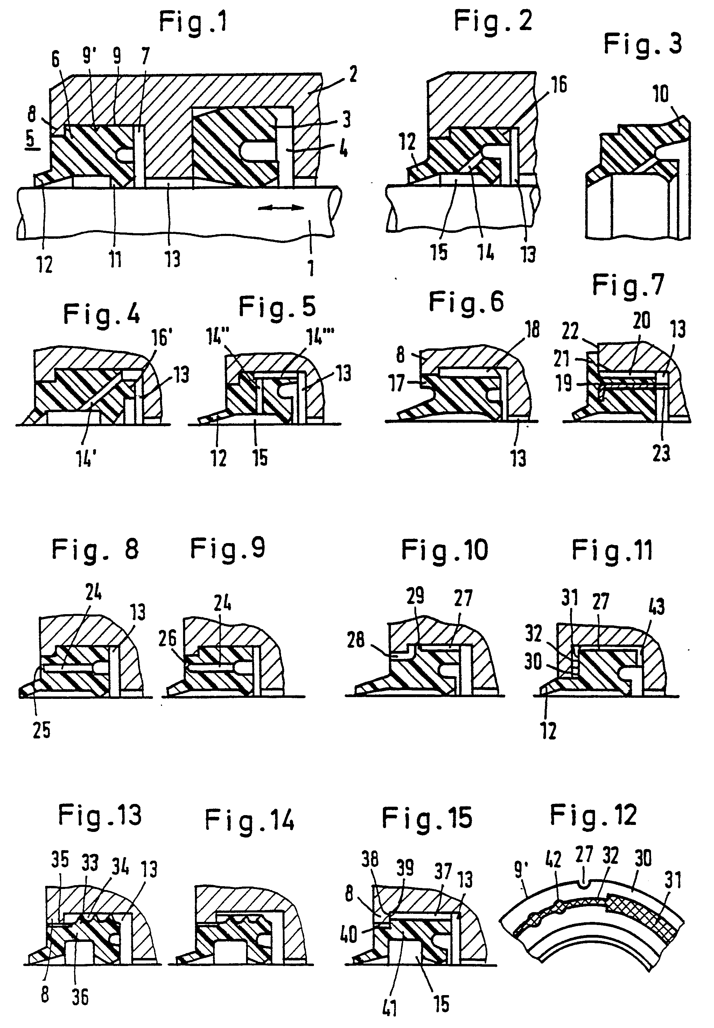

Die in Fig. 1 in Pfeilrichtung hin- und hergehende Stange 1 ist innerhalb des Gehäuses 2 mittels eines Dichtungsrings 3 gegenüber dem auf der Druckseite 4 innerhalb des Gehäuses wirkenden Drucks abgedichtet. Außerhalb des Gehäuses, also im Bereich 5, wirkt ein niedrigerer Druck, im allgemeinen Atmosphärendruck. Vor dem Dichtungsring 3 ist der Abstreifring 6 angeordnet, der aus einem für solche Zwecke üblichen, verhältnismäßig harten, hinreichend elastischen Werkstoff besteht. Er befindet sich in einer Gehäuseausnehmung 7 und liegt mit seiner äußeren Umfangsfläche 9' an der Fläche 9 der Gehäuseausnehmung an, die im folgenden der Einfachheit halber als Gehäusefläche bezeichnet wird.

Die Gehäusefläche ist meist zylindrisch. Die äußere Umfangsfläche des Abstreifrings 6 ist ebenfalls etwa zylindrisch, wobei radiale Vorsprünge oder Lippen zwecks besserer Abdichtung gegenüber der Gehäusefläche vorgesehen sein können. Eine solche nach außen vorspringende Lippe 10 ist in Fig. 3 am Beispiel eines entspannten Abstreifrings im Vergleich zu Fig. 2, die denselben Ring im eingebauten Zustand zeigt, erkennbar. Der Abstreifring 6 wird innerhalb der Gehäuseausnehmung 7 durch einen radial nach innen vorspringenden Kragen 8 gehalten. Dieser Kragen kann je nach Anwendungsfall unterschiedliche radiale Abmessungen im Vergleich mit der radialen Erstreckung des Abstreifrings haben, wie sich dies beispielsweise aus ISO 6195 ergibt. Auf den Kragen kann verzichtet werden, wenn der mit einer Metalleinlage versehene oder aus sehr hartem Werkstoff bestehende Abstreifring mit Übermaß in die Gehäusefläche 9 eingepreßt ist.

Auf der der Stange 1 zugewendeten Seite ist der Abstreifring mit einer inneren Abstreiflippe 11 und einer äußeren Abstreiflippe 12 ausgestattet. Die innere Abstreiflippe 11 dient zum Zurückhalten des an der Stange anhaftenden Flüssigkeitsfilms beim Auswärtshub. Die Abstreiflippe 12 dient zum Abstreifen der an der Stange beim Einwärtshub anhaftenden Fremdkörper. Die Verwendung des Ausdrucks « Lippe » in diesem Zusammenhang bedeutet nicht, daß die Lippenform in der Querschnittsgestaltung in allen Fällen ausgeprägt sein muß. Es kommt vielmehr ausschließlich auf die beschriebene Funktion der entsprechenden Querschnittsteile des Abstreifrings an.

Man erkennt, daß sich in der zwischen dem Dichtring 3 und dem Abstreifring 6 eingeschlossenen Kammer 13 ein beträchtlicher Druck aufbauen kann, wenn Medium im normalen Betrieb oder aufgrund eines Fehlers den Dichtungsring 3 passiert und von der inneren Abstreiflippe 11 am Austritt gehindert wird. Abhilfe schaffen die Abstreifringausführungen, die in den Fig. 2 bis 15 dargestellt sind, wobei gleichzeitig das Eindringen von Fremdkörpern von außen verhindert wird.

Bei der Ausführung gemäß Fig. 2 führt ein ständig offener Kanal 14 von der mit der Kammer 13 in Verbindung stehenden Rückfläche des Abstreifrings zu dessen Lippenzwischenraum 15. Der Druck in der Kammer 13 herrscht daher auch im Lippenzwischenraum 15. Wächst dieser Druck über ein bestimmtes Maß an, so wird die äußere Abstreiflippe 12 von der Gegendichtfläche abgehoben, so daß der Überdruck entweichen kann. Jedoch wirkt die Lippe in der Art eines Rückschlagventils, so daß kein Medium und keine Fremdkörper von außen in den Lippenzwischenraum eindringen können.

Während bei der Ausführung gemäß Fig. 2 das rückwärtige Ende des Kanals 14 radial innerhalb eines hinteren Abstützvorsprungs 16 des Abstreifrings liegt, mündet der Kanal 14' in der Ausführung gemäß Fig. 4 radial außerhalb des entsprechenden Vorsprungs 16'. Im übrigen ist die Funktion der Ausführung gemäß Fig. 4 dieselbe wie diejenige der Ausführung gemäß Fig. 2. Die Funktion wird auch nicht dadurch gestört, daß unter Umständen der Vorsprung 16' an der hinteren Fläche der Gehäuseausnehmung anliegen kann, weil dies nur dann möglich ist, wenn kein wesentlicher Druck in der Kammer 13 herrscht.

Auch die Ausführung gemäß Fig. 5 ist derjenigen nach Fig. 2 und 4 funktionsgleich. Der Strömungsweg von der Kammer 13 führt durch eine in die Umfangsfläche 9' des Abstreifrings achsparallel eingeschnittene Nut 14''' und einen radialen Kanal 14'' zu dem Lippenzwischenraum 15.

Von der Rückschlagklappenfunktion einer elastischen Lippe macht auch das Ausführungsbeispiel gemäß Fig. 6 Gebrauch. Der Abstreifring, der in der Grundform dem in Fig. 1 gezeigten entspricht, liegt mit einer elastisch vorgespannten Lippe 17 an der Innenfläche des Gehäusevorsprungs 8 an. In die an der Gehäusefläche anliegende Umfangsfläche des Abstreifrings ist an einer oder mehreren Stellen eine Nut 18 derart eingeschnitten, daß der in der Kammer 13 herrschende Druck sich bis unmittelbar hinter die elastische Lippe 17 ausbreiten kann. Bei einem gewissen Überdruck hebt sich die Lippe 17 von ihrer Gegenfläche ab und gestattet so eine Entspannung der Kammer 13. Die Lippe ist aber nur dann abgehoben, wenn eine Strömung von innen nach außen stattfindet, so daß ein Eindringen von Fremdkörpern von außen nach innen zuverlässig ausgeschlossen ist.

Der Abstreifring gemäß Fig. 7 gehört demjenigen Typ an, der einen metallischen Einlagering 19 enthält und dessen Umfangsfläche im Verhältnis zur Gehäusefläche ein solches Übermaß besitzt, daß er die vorgesehene Stellung aufgrund der zwischen diesen Flächen herrschenden Reibung beibehält, wenn er in die Gehäuseausnehmung eingepreßt ist. An einer oder mehreren Stellen der Umfangsfläche ist eine Nut 20 eingeschnitten, die von der an die Kammer 13 angrenzenden Rückfläche des Abstreifrings bis zum vorderen Ende der Gehäuseausnehmung führt. Dort greift eine Lippe 21 radial nach außen über die Stirnfläche 22 des Gehäuses und liegt an dieser unter Vorspannung an. Ein über die Rückfläche des Abstreifrings hinausstehender Teil 23 des metallischen Einlagerings 19 dient zur Positionierung des Abstreifrings als ein mit der Rückfläche der Gehäuseausnehmung zusammenwirkender Anschlag, der stellenweise durchbrochen ist, um den Durchlaß des Mediums zum Kanal 20 zu ermöglichen. Die Lippe 21 gleicht funktionell der Lippe 17 des zuvor erläuterten Ausführungsbeispiels.

Nach einem anderen Prinzip wirken die Ausführungen gemäß Fig. 8 und 9. Man erkennt darin eine achsparallele Bohrung, die von der mit der Kammer 13 in Verbindung stehenden Rückfläche des Abstreifrings bis nahe an dessen Stirnfläche heranführt und von dieser durch eine dünne Materialswand getrennt ist. Diese Materialwand 25 ist in Fig. 8 etwa eben ausgeführt. Sie kann mit einem Stempel kleinen Durchmessers zur Bildung einer Öffnung durchstanzt werden, deren Durchmesser so klein ist, daß keine schädlichen Verunreinigungen eindringen können, und die infolge der Elastizität des Materials elastisch aufgeweitet werden kann, wenn die Stärke des Ausgleichsstroms dies verlangen sollte. Statt dessen kann die Membran auch ohne Materialwegnahme durchstochen werden, so daß die die Öffnung begrenzenden Flächen sich anschließend wieder zusammenschließen und eine Dichtung gegenüber äußeren Fremdkörpern bilden, während sie gegenüber innerem Überdruck nachgeben können.

Dasselbe gilt auch für die Ausführung gemäß Fig. 9, wobei lediglich der Unterschied zu verzeichnen ist, daß die die Bohrung 24 abschließende Membran 26 einen von allen Seiten des Kanals kegelförmig zulaufenden Form besitzt. Dank ihrer innenseitigen Hohlkegelgestalt kann die in der Mitte durchbohrte oder durchstochene Membran 26 unter einem von außen nach innen wirkenden Differenzdruck nicht oder nur schwer, durch einen von innen nach außen wirkenden Differenzdruck jedoch leicht geöffnet werden kann.

Der Abstreifring gemäß Fig. 10 hat eine dem Abstreifring gemäß Fig. 1 gleichende Grundform mit einer sich dicht an die Gehäusefläche anliegenden Umfangsfläche. An mindestens einer Umfangsstelle ist eine sich aus den Abschnitten 27 und 28 zusammensetzende Nut eingeschnitten, die von der Rückfläche des Abstreifrings bis zu deren Stirnfläche durchläuft und lediglich bei 29 durch eine kleine Wand unterbrochen ist, die bis zur Gehäusefläche vorragt und daher im entspannten Zustand den Strömungsweg sperrt. Sie ist jedoch so dünn ausgeführt, daß ein innerer Überdruck sie derart zu verbiegen und von der Gehäusefläche abzuheben vermag, daß ein Druckausgleich stattfinden kann. Anschließend kehrt sie unter der ihr innewohnenden elastischen Kraft in die Ausgangsstellung zurück, in welcher der Durchgang versperrt ist.

Auf demselben Prinzip beruht die Ausführung gemäß Fig. 11 bzw. 12, jedoch ist bei diesem Ring die äußere Dichtlippe zur besseren axialen Fixierung im Einbauraum bis direkt an die hintere Flanke im Einbauraum gezogen. An der Umfangsfläche des Abstreifrings ist eine axiale Nut 27 und in der hinteren Stirnfläche sind radiale Nuten 43 vorgesehen, die den Raum zwischen dem Gehäusekragen 8 und der dieser gegenüberliegenden Stirnfläche 30 mit der Kammer 13 verbinden. Von der Stirnfläche 30 ragt axial ein Ringvorsprung 31 vor, dessen radiale Erstreckung so groß ist, daß er den Abstreifring hinreichend am Gehäusekragen abstützen kann. Der Ringvorsprung 31 kann auch durch Noppen 42 ersetzt werden, zwischen denen dann die Lamellen 32 angeordnet sind. An wenigstens einer Stelle ist der Ringvorsprung 31 als verhältnismäßig dünne Lamelle 32 ausgeführt, die ebenfalls bis zum Gehäusekragen 8 vorragt und bei Druckausgleich dichtend an diesem anliegt. Es sei ferner angenommen, daß zwischen dem Gehäusekragen 8 und der Lippe 12 ein Durchtrittsquerschnitt bestehe. Bei Druckgleichheit verhindert die Lamelle 32 ein Eindringen von Fremdkörpern von außen in die Kammer 13. Bei innerem Überdruck jedoch gibt sie elastisch nach, um den Druckausgleich zu gestatten.

Das in Fig. 13 dargestellte Ausführungsbeispiel weist an der Umfangsfläche mehrere bis zur Gehäusefläche vorragende, in Umfangsrichtung verlaufende Rippen 33 auf. Es ist möglich, daß die gesamte Umfangsfläche von den geschlossen umlaufenden Rippen 33 und den dazwischen liegenden Vertiefungen gebildet ist. Jedoch ist es auch möglich, daß die Umfangsfläche wie bei den sonstigen Ausführungsbeispielen im allgemeinen eine durchgehende zylindrische Fläche bildet, während nur an einzelnen Umfangsstellen die Rippen 33 vorgesehen sind. An einer Umfangsstelle, an der sich auch Rippen 33 bzw. die zwischen diesen gebildeten Vertiefungen 34 befinden, erstreckt sich ein Durchlaß 35 am Umfang des Abstreifrings durch den Bereich des Gehäusekragens 8. Die Wand 36 des Abstreifrings radial innerhalb der Rippen 33 ist vergleichsweise dünn ausgebildet. Die Vorspannung, mit der die Rippen an der Gehäusefläche anliegen, ist so gewählt, daß ein in der Kammer 13 befindlicher Überdruck, wenn er eine bestimmte Schwelle überschreitet, hindurchdringen kann, so daß sich außerhalb des dünnen Wandbereichs 36 ein Überdruck aufbauen kann, der zu einer radialen Verformung der Wand 36 führt, durch die die Rippen 33 von der Gehäusewand abgehoben werden. Dadurch wird ein Strömungsweg zur Entspannung der Kammer 13 geschaffen. Den solchermaßen verformten Zustand veranschaulicht Fig. 14.

Der Abstreifring gemäß Fig. 15 gleicht in der Grundform demjenigen gemäß Fig. 1, d. h. daß die Umfangsfläche des Rings im wesentlichen vollflächig an der Gehäusefläche anliegt. An einer oder wenigen Stellen ist eine etwa axiale Nut 37 in die Umfangsfläche eingeformt, die bis zur Rückfläche 38 des Gehäusekragens 8 führt. Dort wo sie die Rückfläche 38 erreicht, hat sie eine geringere radiale Erstreckung als diese Fläche 38, so daß die dieser Rückfläche 38 gegenüberstehende Stirnfläche des Abstreifrings selbst im Bereich der Nut 37 die Rückfläche 38 bei 39 noch ein wenig überdeckt und dichtend daran anliegt. Radial innerhalb des Gehäusekragens 8 ist eine Durchflußmöglichkeit 40 in der Oberfläche des Abstreifrings geschaffen. Radial innerhalb des Bereichs 39 ist die Wand 41 des Abstreifrings verhältnismäßig dünn ausgeführt. Wenn in der Nut 37, die zwecks besserer Druckeinwirkung flächenhaft in Umfangsrichtung verbreitert sein kann, von der Kammer 13 her ein Überdruck gegenüber dem Lippenzwischenraum 15 auftritt, so wird die Wand 41 radial nach innen verformt, wobei die Abmessungen so getroffen sind, daß bei einer bestimmten Druckschwelle der Bereich 39 der der Rückfläche 38 zugewendeten Stirnfläche des Abstreifrings den dichtenden Kontakt mit dem Kragen 8 verliert und sich somit ein Durchtrittsquerschnitt für einen Entspannungsstrom nach außen bilden kann. Wenn die Entspannung stattgefunden hat, kehrt die Wand 41 und damit der Bereich 39 des Abstreifrings in eine abdichtende Lage zurück, so daß Fremdkörpern der Durchtritt von außen nach innen verwehrt ist.

Man erkennt ohne weiteres, daß die beschriebene Funktion des Abstreifrings unabhängig davon ist, ob dieser ein- oder mehrteilig ist. Wenn im vorliegenden Zusammenhang im Singular vom Abstreifring gesprochen wird, so soll dieser Ausdruck daher auch mehrteilige Ausführungen einschließen.

## Patentansprüche

1. Dichtungsanordnung mit einem einen Hochdruckbereich (4) von einem Niederdruckbereich (5) trennenden Gehäuse (2), mit einer eine Öffnung des Gehäuses durchquerenden und in ihrer Längsrichtung hin- und herbeweglichen Stange (1), mit einer hochdruckseitig die Gehäuseöffnung gegenüber der Stange abdichtenden Dichtung (3) und einem niederdruckseitig von dieser Dichtung in der Gehäuseöffnung angeordneten Doppelabstreifring (6), der außer einem an der Stangenoberfläche anliegenden, gegen die Niederdruckseite gerichteten äußeren Abstreiforgan (12) eine gegen die Hochdruckseite gerichtete, an der Stangenoberfläche anliegende innere Lippe (11) zum Abstreifen des daran haftenden Ölfilms aufweist, wobei ein von der zwischen der Dichtung (3) und dem Abstreifring (6) gelegenen Kammer zum Niederdruckbereich (5) führender, gegen das Eindringen von Fremdkörpern geschützter Kanal vorgesehen ist, dadurch gekennzeichnet, daß der im Abstreifring (6) gebildete Kanal (14, 14', 14", 14''', 18, 20, 24, 27, 28, 34, 37) ein elastisches Sperrglied (12, 17, 21, 25, 26, 29, 32, 33, 39) enthält, das bei Druckübereinstimmung zwischen der Kammer (13) und dem Niederdruckbereich (5) dicht an einer Gegenfläche (1, 8, 22, 9, 38) anliegt und durch in der Kammer (13) herrschenden Überdruck nach außen unter Abhebung von der Gegenfläche verformbar ist.

2. Dichtungsanordung nach Anspruch 1, dadurch gekennzeichnet, daß das elastische Sperrglied bei Druckübereinstimmung unter Vorspannung an der Gegenfläche anliegt.

3. Dichtungsanordnung nach Anspruch 2, dadurch gekennzeichnet, daß das elastische Sperrglied von dem als vorgestammte Lippe (12) ausgebildeten äußeren Abstreiforgan gebildet wird und der Kanal (14, 14', 14", 14''') in den zwischen der äußeren und der inneren Abstreiflippe gebildeten Lippenzwischenraum (15) mündet.

4. Dichtungsanordnung nach Anspruch 1 oder 2, dadurch gekennzeichnet, daß der Abstreifring an seinem mit dem Gehäuse (2) zusammenzuwirken bestimmten Oberflächenteil eine elastische Dichtlippe (17) aufweist und ein offener Kanal (18) von der Kammerseite des Abstreifrings zur Innenseite dieser Dichtlippe führt.

5. Dichtungsanordnung nach Anspruch 4, dadurch gekennzeichnet, daß die elastische Dichtlippe (17) am niederdruckseitigen Ende des mit dem Gehäuse (2) zusammenzuwirken bestimmten Oberflächenteils (9') des Abstreifrings angeordnet ist.

6. Dichtungsanordnung nach Anspruch 1 oder 2, dadurch gekennzeichnet, daß ein Kanal (24) von der Kammerseite zur Außenseite des Abstreifrings führt und eine durch kammerseitigen Überdruck elastisch zu öffnende Engstelle (25, 26) aufweist.

7. Dichtungsanordnung nach Anspruch 6, dadurch gekennzeichnet, daß die Engstelle (25, 26) an der außenseitigen Mündung des Kanals vorgesehen ist.

8. Dichtungsanordnung nach Anspruch 6 oder 7, dadurch gekennzeichnet, daß die Engstelle (25, 26) als Perforation einer dünnen Wand gebildet ist.

9. Dichtungsanordnung nach einem der Ansprüche 6 bis 8, dadurch gekennzeichnet, daß die Engstelle (26) von lippenartig nach außen gerichteten Werkstoffteilen gebildet ist.

10. Dichtungsanordnung nach Anspruch 1 oder 2, dadurch gekennzeichnet, daß ein Kanal (27, 28) in dem mit dem Gehäuse (2) zusammenzuwirken bestimmten Oberflächenteil des Abstreifrings geformt ist und eine zur Gehäusefläche (9) vorragende elastische Lamelle (29, 32) enthält.

11. Dichtungsanordnung nach Anspruch 1 oder 2, dadurch gekennzeichnet, daß im Strömungsweg am Außenumfang (9') des Abstreifrings ein mit der Kammer (13) verbundener Raum (34, 37) vorgesehen ist, der auf seiner radialen nach innen gewendeten Seite durch eine elastische, unter kammerseitigem Überdruck nach radial innen verformbare Wand (36, 41) begrenzt ist, die eine nach radial außen zur Gehäusefläche (9, 38) vorragende Trennwand (33, 39) aufweist.

## Claims

1. A sealing assembly with a housing (2) separating a high-pressure zone (4) from a low-pressure zone (5), with a rod (1) passing through an opening in the housing and movable to and fro in its longitudinal direction, with a seal (3) sealing the housing opening relative to the rod on the high-pressure side and with a double wiper ring (6) which is disposed on the low-pressure side of this seal in the housing opening and which, besides an outer wiper member (12) bearing against the rod surface and directed towards the low-pressure side, has an inner lip (11) directed towards the high-pressure side and bearing against the rod surface for wiping off the oil film adhering thereto, a passage being provided leading from a chamber situated between the seal (3) and the wiper ring (6) to the low-pressure zone (5) and being protected against the ingress of foreign bodies, characterised in that the passage (14, 14', 14", 14''', 18, 20, 24, 27, 28, 34, 37) formed in the wiper ring (6) comprises an elastic sealing element (12, 17, 21, 25, 26, 29, 32, 33, 39) which, when there is uniformity of pressure between the chamber (13) and the low-pressure zone (5), bears tightly against a counter surface (1, 8, 22, 9, 38) and as a result of an overpressure prevailing in the chamber (13) it is deformed outwards, whereupon it is raised from the counter surface.

2. A sealing assembly according to Claim 1, characterised in that when there is uniformity of pressure the elastic sealing element bears against the counter surface under preloading.

3. A sealing assembly according to Claim 2, characterised in that the elastic sealing element is formed by the outer wiper member in the form of a resultant lip (12) and the passage (14, 14', 14", 14''') opens into the lip intermediate space (15) formed between the outer and inner wiper lips.

4. A sealing assembly according to Claim 1 or 2, characterised in that on its surface portion intended to cooperate with the housing (2) the wiper ring has an elastic sealing lip (17) and an open passage (18) leads from the chamber side of the wiper ring to the inside of this sealing lip.

5. A sealing assembly according to Claim 4, characterised in that the elastic sealing lip (17) is disposed at the low-pressure side end of the surface portion (9') of the wiper ring intended to the cooperate with the housing (2).

6. A sealing assembly according to Claim 1 or 2, characterised in that a passage (24) leads from the chamber side to the outside of the wiper ring and has a thin portion (25, 26) opening elastically as a result of overpressure on the chamber side.

7. A sealing assembly according to Claim 6, characterised in that the narrow portion (25, 26) is provided at the outside mouth of the passage.

8. A sealing assembly according to Claim 6 or 7, characterised in that the thin portion (25, 26) is formed as a perforation in a thin wall.

9. A sealing assembly according to any of Claims 6 to 8, characterised in that the thin portion (26) is formed by material parts directed outwardly in the manner of a lip.

10. A sealing assembly according to Claim 1 or 2, characterised in that a passage (27, 28) is formed in the surface portion of the wiper ring intended to the cooperate with the housing (2) and includes a elastic lamella projecting towards the housing surface (9).

11. A sealing assembly according to Claim 1 or 2, characterised in that in the flow path on the outer periphery (9') of the wiper ring there is provided a space (34, 37) connected with the chamber (13) and bounded on its radially inward facing side by an elastic wall (36, 41) which can be deformed radially inwards under overpressure on the chamber side and which has a dividing wall (33, 39) projecting radially outwards towards the housing surface (9, 38).

## Revendications

1. Dispositif d'étanchéité comportant un boîtier (2) qui sépare une zone de haute pression (4) d'une zone de basse pression (5), avec une barre (1) qui traverse une ouverture du boîtier et qui est mobile en un mouvement longitudinal de va-et-vient, avec une garniture (3) qui, du côté haute pression, assure l'étanchéité entre l'ouverture du boîtier et la barre et un segment racleur double (6) disposé dans l'ouverture du boîtier du côté basse pression par rapport à cette garniture, segment qui comporte, outre un organe racleur extérieur (12) appliqué sur la surface de la barre et dirigé du côté basse pression, une lèvre intérieure (11) appliquée sur la surface de la barre et dirigée vers le côté haute pression pour le raclage de la pellicule d'huile qui adhère à cette surface, un passage protégé contre la pénétration de corps étrangers s'étendant de la chambre comprise entre la garniture (3) et le segment racleur (6) jusqu'à la zone de basse pression, caractérisé en ce que le passage (14, 14', 14", 14''', 18, 20, 24, 27, 28, 34, 37) formé dans le segment racleur (6) contient un organe de fermeture élastique (12, 17, 21, 25, 26, 29, 32, 33, 39) qui en cas de concordance de pression entre la chambre (13) et la zone de basse pression (5), s'applique de manière étanche sur une contre-surface (1, 8, 22, 9, 38) et qui, sous l'effet d'une surpression régnant dans la chambre (13), est déformable vers l'extérieur en s'écartant de la contre-surface.

2. Dispositif d'étanchéité selon la revendication 1, caractérisé en ce qu'en cas de concordance de pression, l'organe de fermeture élastique s'applique avec précontrainte sur la contre-surface.

3. Dispositif d'étanchéité selon la revendication 2, caractérisé en ce que l'organe de fermeture élastique est constitué par l'organe racleur extérieur réalisé sous forme de lèvre saillante (12) et en ce que le passage (14, 14', 14", 14''') débouche dans l'intervalle entre lèvres formé entre les lèvres racleuses extérieure et intérieure.

4. Dispositif d'étanchéité selon la revendication 1 ou 2, caractérisé en ce que le segment racleur comporte une lèvre d'étanchéité élastique sur la partie de sa surface destinée à coopérer avec le boîtier et en ce qu'un passage ouvert (18) s'étend depuis le côté chambre du segment racleur jusqu'au côté interne de cette lèvre d'étanchéité.

5. Dispositif d'étanchéité selon la revendication 4, caractérisé en ce que la lèvre d'étanchéité élastique (17) est disposée à l'extrémité du côté basse pression de la partie (9') de la surface du segment racleur destinée à coopérer avec le boîtier (2).

6. Dispositif d'étanchéité selon la revendication 1 ou 2, caractérisé en ce qu'un passage (24) s'étend depuis le côté chambre jusqu'au côté externe du segment d'étanchéité et comporte un point d'étranglement (25, 26) destiné à s'ouvrir élastiquement sous l'effet d'une surpression du côté chambre ;

7. Dispositif d'étanchéité selon la revendication 6, caractérisé en ce que le point d'étranglement (25, 26) est prévu à l'orifice du passage du côté externe.

8. Dispositif d'étanchéité selon la revendication 6 ou 7, caractérisé en ce que le point d'étranglement (25, 26) est réalisé sous forme de perforation d'une mince cloison.

9. Dispositif d'étanchéité selon l'une quelconque des revendications 6 à 8, caractérisé en ce que le point d'étranglement (26) est constitué par des parties de matière dirigées vers l'extérieur à la manière de lèvres.

10. Dispositif d'étanchéité selon la revendication 1 ou 2, caractérisé en ce qu'un passage (27, 28) est formé dans la partie de la surface du segment racleur destinée à coopérer avec le boîtier (2) et contient une lamelle élastique (29, 32) qui fait saillie vers la surface (9) du boîtier.

11. Dispositif d'étanchéité selon la revendication 1 ou 2, caractérisé en ce qu'il est prévu dans le trajet d'écoulement, à la périphérie extérieure (9') du segment racleur, une cavité (34, 37) qui communique avec la chambre (13) et qui est délimitée, sur son côté dirigé radialement vers l'intérieur, par une paroi (36, 41) qui est déformable radialement vers l'intérieur sous l'effet d'une surpression du côté de la chambre et qui comporte une cloison (33, 39) faisant saillie radialement vers l'extérieur en direction de la surface (9, 38) du boîtier.

0 104 504

Fig.1 Fig.2 Fig.3 Fig.4 Fig.5 Fig.6 Fig.7 Fig.8 Fig.9 Fig.10 Fig.11 Fig.13 Fig.14 Fig.15 Fig.12

1